# EUROPÄISCHE PATENTSCHRIFT

(11) **EP 2 338 658 B1**
(45) Veröffentlichungstag und Bekanntmachung des Hinweises auf die Patenterteilung: **11.06.2014**
(21) Anmeldenummer: 09015990.6
(22) Anmeldetag: 23.12.2009
(51) Int. Cl.: B29C 45/16, F16L 5/02

(54) **Verfahren zur Herstellung und Verwendung einer Dichtpackung**
Method for manufacturing and use a seal
Procédé de fabrication et utilisation d'un bourrage d'étanchéité

(43) Veröffentlichungstag der Anmeldung: 29.06.2011
(60) Teilanmeldung: 14166244.5
(73) Patentinhaber: Hauff-Technik GmbH & Co. KG, 89542 Herbrechtingen (DE)
(72) Erfinder: Heck, Martin, 89447 Zöschingen (DE); Kurz, Ralf, 89537 Giengen (DE)
(74) Vertreter: Szynka, Dirk

(56) Entgegenhaltungen:
- EP-A1- 0 151 519
- EP-A1- 1 462 561
- EP-A1- 2 003 757
- DE-C1- 4 427 603
- GB-A- 2 192 578
- US-A- 4 193 105
- Hauff-Technik GmbH: "Datenblatt V-CABLE HSI 90" Hauff-Technik.de 1. Juli 2009 (2009-07-01), XP002586495 Herbrechtingen Gefunden im Internet: URL:http://www.hauff-technik.de/upload/edi t_2/2183_19425/V_CABLE_HSI90_K_090701.pdf [gefunden am 2010-06-08]
- "NEUE HART-/WEICHVERBINDUNGEN MIT TECHNISCHEN KUNSTSTOFFEN" 7. Juni 2000 (2000-06-07), FACHTAGUNG THERMOPLASTISCHE ELASTOMERE: WERKSTOFFE MIT ZUKUNFT, XX, XX, PAGE(S) F/02 - F/19,I , XP001148266 * das ganze Dokument *

## Beschreibung

Die vorliegende Erfindung betrifft ein Verfahren zur Herstellung und die Verwendung einer Dichtpackung mit einem Rohrelement, durch welches eine Leitung hindurchführbar ist, und einem Dichtungselement, welches außenseitig um das Rohrelement umlaufend angeordnet ist.

Bei den aus dem Stand der Technik bekannten Verfahren zur Herstellung einer Dichtpackung mit einem außenseitig umlaufenden Dichtungselement wird ein Butyldichtband auf eine dem Außenumfang entsprechende Länge zugeschnitten und am Rohrelement verklebt. Neben Schwierigkeiten hinsichtlich einer reproduzierbaren Positionierung des Bandes sind dazu auch mehrere zeit- und kostenaufwendige Fertigungsschritte, beispielsweise zur Oberflächenreinigung und -vorbereitung, notwendig.

Die DE 44 27 603 C1 offenbart ein extrudiertes Dichtungsprofil aus PVC und Methylkautschuk, das um ein Rohrelement gelegt und mit einem Spannband darauf fixiert wird.

Die EP 2 003 757 A1 betrifft eine aus einem äußeren Isolierteil und einem dann nach Einbetonieren des Isolierteils eingeschobenen Erdleiter zusammengesetzte Leitungsdurchführung. Bei einer Ausführungsform ist an dem Isolierteil eine einstückig damit ausgebildete, außenseitig umlaufende Stegdichtung vorgesehen, die gemeinsam mit dem Isolierteil spritzgegossen wird.

Die GB 2 192 578 A betrifft einen Rohrverbinder mit einem innenseitig einer Rohrmuffe vorgesehenen Dichtelement; der Rohrverbinder wird im Zwei-Komponenten-Spritzgussverfahren hergestellt.

Unterlagen einer Fachtagung mit dem Titel "FACHTAGUNG THERMOPLASTISCHE ELASTOMERE: WERKSTOFFE MIT ZUKUNFT" zeigen einen Vergleich verschiedener in einem Zwei-Komponenten-Spritzguss-Verfahren aneinander angeformter Materialien. Dabei wird beispielsweise die Haftung von einem thermoplastischen Elastomer, Methylkautschuk, Silikonkautschuk und Ethylen-Propylen-Dien-Kautschuk auf Polyamid verglichen.

Der vorliegenden Erfindung liegt die Aufgabe zugrunde, ein gegenüber dem Stand der Technik vorteilhaftes Verfahren zur Herstellung einer Dichtpackung, die für einen permanenten Einbau In ein Wand- oder Bodenelement verwendet wird, mit außenseitig umlaufendem Dichtungselement anzugeben.

Erfindungsgemäß wird diese Aufgabe durch die entsprechende Verwendung einer Dichtpackung gelöst, die in einem Verfahren hergestellt ist, bei dem fließfähiges Kunststoffmaterial einer ersten Kavität zugeführt wird, in dieser zumindest teilweise zu einem Kunststoffformteil aushärtet, welches Kunststoffformteil dann eine zweite Kavität teilweise begrenzt, welcher wiederum fließfähiges Kunststoffmaterial zugeführt wird, das dann in der Kavität zumindest teilweise zu einem an das erste Kunststoffformteil angeformten Kunststoffformteil aushärtet. Dabei unterscheiden sich das erste und das zweite fließfähige Kunststoffmaterial in zumindest einem Bestandteil und gibt eine der beiden Kavitäten das Rohrelement der Dichtpackung frei, und die andere der beiden Kavitäten gibt das außenseitig um das Rohrelement umlaufende Dichtungselement frei.

Dieses Verfahren ist besonders vorteilhaft, weil das Zuschneiden und Aufschrumpfen bzw. Verkleben betreffende Arbeitsschritte entfallen, der Herstellungsprozess also vereinfacht wird.

Das fließfähige Kunststoffmaterial ist dabei geeignet, sich an die Wandung der Kavität anzulegen, also deren Form anzunehmen. Das Kunststoffmaterial kann beispielsweise durch Erwärmen fließfähig (mit bestimmter Viskosität flüssig) gemacht werden, in diesem Zustand der Kavität zugeführt und durch Abkühlen zumindest teilweise ausgehärtet werden. Es kann jedoch auch Kunststoffmaterial verwendet werden, welches bei Raumtemperatur fließfähig ist und in der Kavität durch einen Vulkanisationsprozess, beispielweise bei gegenüber der Raumtemperatur erhöhter Temperatur, aushärtet. Das Kunststoffmaterial könnte auch ein Vorprodukt sein, welches erst während des Verfahrens zu einem Kunststoff wird, etwa polymerisiert. Die Kunststoffformteile sind nach dem Aushärten formfest, behalten also im Wesentlichen die durch die Kavität vorgegebene Form, sind jedoch nicht notwendigerweise formstarr im Sinne von nicht mehr verformbar, sodass materialabhängig beispielsweise eine elastische oder viskoplastische Verformung auch nach dem Aushärten möglich sein kann. Des Weiteren kann der Übergang von einem formfesten in den fließfähigen bzw. von diesem in den formfesten Zustand auch durch eine Veränderung des Druckzustands bzw. durch Zugabe von Katalysatoren bzw. chemischen Reaktionspartnern erreicht werden.

Indem das zweite Formteil direkt an das erste angeformt wird, können z. B. Verunreinigungen an der Grenzfläche zwischen den beiden Kunststoffformteilen reduziert werden und kann jedenfalls eine Verbindung mit guten Haftungseigenschaften und folglich guter Dichtigkeit realisiert werden.

Das mit diesem Verfahren erzeugte Rohrelement hat eine Öffnung, durch welche eine Leitung hindurchführbar ist, wobei ein innenseitiger Bereich des Rohrelements der Leitung zugewandt ist und das Dichtungselement in einem diesen gegenüberliegenden außenseitigen Bereich umlaufend angeordnet ist. Die Dichtpackung kann dann beispielsweise in einer Mauer vergossen oder verputzt werden, wobei das außenseitig umlaufende Dichtungselement als Sperre für entlang der Außenseite des Rohrelements in Leitungsrichtung kriechendes Wasser dienen kann. Diese Sperrwirkung ist besonders effektiv, wenn das Dichtungselement einen in Umlaufrichtung geschlossenen über den gesamten Umfang am Rohrelement anliegenden Körper bildet. Indem ein solches geschlossenes Dichtungselement beispielsweise mit genau einer Kavität geformt wird, können gegebenenfalls auch innerhalb des Dichtungselementes verlaufende Grenzflächen, welche als intrinsische Schwachstelle im Material zu Undichtigkeiten führen könnten, vermieden werden.

Das Rohrelement kann in Leitungsrichtung gesehen einen im Wesentlichen kreisförmigen Querschnitt haben, jedoch sind auch andere Querschnittsformen möglich, insbesondere Querschnittsformen mit geraden Seitenflächen, wie beispielsweise eine rechteckige Querschnittsform.

Bevorzugte Ausgestaltungen der Erfindung sind in den abhängigen Ansprüchen angegeben. Im Folgenden wird nicht mehr im Einzelnen zwischen der Beschreibung des Verfahrens und dem Vorrichtungsaspekt der mit dem Verfahren hergestellten Leitungsdurchführung sowie deren Verwendung unterschieden, die Offenbarung ist implizit im Hinblick auf alle Kategorien zu verstehen.

Eine Ausgestaltung der Erfindung sieht vor, dass die erste Kavität das Rohrelement freigibt und die zweite Kavität das außenseitig um das Rohrelement umlaufende Dichtungselement freigibt. Das in der ersten Kavität hergestellte Kunststoffformteil entspricht also einem Rohrelement mit einer der Leitung zugewandten inneren Oberfläche und einer zu dieser entgegengesetzten äußeren Oberfläche. Die zweite Kavität, in welcher das Dichtungselement geformt wird, wird dann teilweise durch die äuβere Oberfläche des Rohrelements begrenzt und somit direkt an das Rohrelement angeformt. Dabei kann die zweite Kavität beispielsweise erzeugt werden, indem ein Formwerkzeug, welches mit die erste Kavität gebildet hat, verschoben wird, sodass Raum für die zweite Kavität freigegeben wird. Es ist ferner möglich, das in der ersten Kavität erzeugte Kunststoffformteil in eine Form oder Halterung umzusetzen, welche dieses aufnimmt und zusätzlich den Raum für die zweite Kavität freigibt. Eine Kavität kann auch mit zwei Formhälften gebildet werden, wobei das in der ersten Kavität hergestellte Kunststoffformteil in einer Formhälfte verbleibt und die zweite Kavität dann mit dieser und einer dritten Formhälfte gebildet wird. Dabei können auch Einzelaspekte der beschriebenen Verfahrensvarianten kombiniert werden, auch unabhängig von der Herstellungsreihenfolge von Rohr und Dichtungselement.

Erfindungsgemäß unterscheiden sich das erste fließfähige Kunststoffmaterial und das zweite fließfähige Kunststoffmaterial zumindest in einem Bestandteil. Es können also die Materialbestandteile vorzugsweise so gewählt werden, dass das Rohrelement und das Dichtungselement unterschiedliche mechanische Eigenschaften haben, sodass beispielsweise für das Rohrelement ein steifes und hochfestes Material vorgesehen sein kann, in welches eine Krafteinleitung verformungsarm erfolgt. Für das Dichtungselement kann elastisches Material verwendet werden, welches neben der dichtenden auch eine federnde Funktion erfüllen kann. Wird die Dichtpackung beispielsweise in Beton vergossen, so kann es beim Aushärten zu einem Schrumpfen des Betons kommen, es entsteht also ein Spalt zwischen der Dichtpackung und dem getrockneten Beton. Dieser Spalt kann durch die Ausdehnung eines zuvor durch den noch nicht getrockneten Beton komprimierten elastischen Dichtungselementes zumindest teilweise verschlossen werden.

Ferner kann eine Dichtpackung beispielsweise auch so gestaltet werden, dass das Dichtungselement von einem Anwender, also insbesondere einem Installateur, farblich von dem Rohrelement unterschieden werden kann.

Wenngleich unterschiedliche mechanische Eigenschaften bzw. ein unterschiedliches optisches Erscheinungsbild der beiden Kunststoffformteile auch über einen Unterschied im jeweils prozentualen Anteil desselben Bestandteils eingestellt werden könnte, so ist eine Unterscheidung der beiden Materialien in zumindest einem Bestandteil doch bevorzugt.

Für das Rohrelement kann beispielsweise ein Kunststoffmaterial mit Polycarbonat, Polyamid, Polystyrol, Polymethylmethacrylat, Polyethylenterephthalat, Polybutylenterephthalat, Acrylester-Styrol-Acrylnitril beziehungsweise Styrol-Acrylnitril als Bestandteil vorgesehen sein.

Bei einer weiteren Ausgestaltung der Erfindung wird der Kavität, welche das Dichtungselement freigibt, ein fließfähiges Kunststoffmaterial mit einem thermoplastischen Elastomer als Bestandteil zugeführt. Als thermoplastischer Elastomer werden dabei vorzugsweise TPE bzw. TPS (auf Styrolblockcopolymeren basierendes TPE) verwendet, und das Material wird vorzugsweise bei einer Temperatur zwischen 180 °C und 250 °C, besonders bevorzugt zwischen 210 °C und 240°C in den fließfähigen Zustand gebracht.

Bei einer weiteren Ausführungsform wird der Kavität, welche das Rohrelement freigibt, ein fließfähiges Kunststoffmaterial mit Acrylnitril-Butadien-Styrol als Bestandteil zugeführt. Dieses auch als Acryl-Butadien-Styrol bzw. Acrylnitril-Butadien-StyrolCopolymerisat bezeichnete und als ABS abgekürzte Material wird vorzugsweise bei einer Temperatur zwischen 220 °C und 260 °C, besonders bevorzugt zwischen 230 °C und 250 °C in den fließfähigen Zustand gebracht. Nach dem zumindest teilweisen Aushärten in der Kavität zeichnet sich das Material durch hohe Festigkeit und Schlagstabilität aus, sodass das Rohrelement beispielsweise bei einem späteren Eingießen in ein Wand- oder Bodenelement auf den hierbei auf die Außenflächen wirkenden Druck im Wesentlichen ohne Verformung reagiert und somit ein Durchgangsloch für die hindurchzuführende Leitung freihält.

In weiterer Ausgestaltung bilden zwei Formhälften die erste Kavität, und die Formhälften werden nach dem zumindest teilweisen Aushärten des fließfähigen Kunststoffmaterials in der ersten Kavität geöffnet, wobei das Kunststoffformteil an der ersten Formhälfte verbleibt und die erste Formhälfte und eine dritte Formhälfte aufeinander zu bewegt und geschlossen werden, sodass mit der dritten Formhälfte die zweite Kavität gebildet wird. Die Formhälften sind nicht notwendigerweise gleich große Hälften und können zum Kunststoffformteil hin eine Oberfläche mit konkaven, konvexen beziehungsweise planen Bereichen aufweisen; es könnte jedoch beispielsweise auch eine Formhälfte durchgehend konkav und die mit ihr eine Kavität bildende Formhälfte durchgehend konvex ausgebildet sein (jeweils zum Kunststoffformteil hin). Die Formhälften können ferner beispielsweise in einer gemeinsamen Gießvorrichtung vorgesehen sein, sodass die Formhälften bzw. die sie bildenden Formwerkzeuge in automatisierten Abläufen geöffnet und geschlossen und relativ zueinander bewegt werden können. Auf diese Weise lassen sich beispielsweise Prozesszeiten verkürzen, womit Durchsatz und Wirtschaftlichkeit erhöht werden können. Ferner besteht auch die Möglichkeit, eine Zwischenlagerung des in der ersten Kavität hergestellten Kunststoffformteils zu vermeiden, sodass der logistische Aufwand verringert und die Gefahr einer zwischenzeitlichen Verunreinigung des Bauteils minimiert wird.

In weiterer Ausgestaltung ist dabei vorgesehen, dass in einer Gießvorrichtung zwei Einheiten zum Zuführen des fließfähigen Kunststoffmaterials ortsfest angeordnet sind und die erste Formhälfte mit dem Kunststoffformteil auf einem Drehteller von der ersten Zuführeinheit durch eine Drehbewegung um eine zu der Gießvorrichtung ortsfeste Achse zu der zweiten Zuführeinheit bewegt wird, bei welcher mit der dritten Formhälfte die zweite Kavität gebildet wird. Bei dieser Ausführungsform kann vorzugsweise zeitgleich mit dem Zuführen des fließfähigen Kunststoffmaterials in die zweite Kavität auch der ersten Kavität wieder fließfähiges Kunststoffmaterial zugeführt werden, die beiden Zuführeinheiten arbeiten dann also nicht sequentiell, sondern parallel. Da die Zuführeinheiten ortsfest in dem Werkzeug montiert sind, ist eine einfache Installation der Versorgungseinheiten möglich, welche das fließfähige Kunststoffmaterial gegebenenfalls temperieren bzw. einen bestimmten Druck einstellen, bei Bedarf chemische Reaktionsteilnehmer beimengen und das fließfähige Material dann der Kavität zuführen, beispielsweise mit einem Schneckenantrieb.

Bei einer weiteren Ausführungsform weist die Kavität, welche das Dichtungselement freigibt, eine Vertiefung auf, sodass ein Dichtungselement mit einem sich quer zur Leitungsrichtung erhebenden und um das Rohrelement umlaufenden Vorsprung geformt wird. Die Richtungsangabe - quer zur Leitungsrichtung - bezeichnet dabei nicht allein Richtungen, die in einem Winkel von 90° zur Leitungsrichtung orientiert sind, sondern auch schräg zur Leitungsrichtung, mit einem Winkel von 45° bis 135°, vorzugsweise mit einem Winkel von 65° bis 115°, besonders bevorzugt mit einem Winkel von 80° bis 100°, orientierte Richtungen. Nach einem späteren Vergießen in einem Wand- oder Bodenelement kann der umlaufende Vorsprung als Sperre für Feuchtigkeit dienen, deren Ausbreitung entlang der Außenseite des Rohrelements zumindest teilweise blockiert wird, indem der sich quer zur Leitungsrichtung erstreckende Vorsprung mögliche Kriechpfade sperrt oder verlängert. Ein Formschluss des Vorsprungs mit dem Wand- bzw. Bodenelement kann die Dichtpackung auch gegen eine Bewegung in Leitungsrichtung sichern, gewährleistet also eine feste Verankerung.

In weiterer Ausgestaltung ist dabei vorgesehen, dass die in Leitungsrichtung beabstandeten Flanken des Vorsprungs sich quer zur Leitungsrichtung hinterschnittfrei erheben, sodass ein Formwerkzeug mit der den Vorsprung bildenden Vertiefung quer zur Leitungsrichtung leicht entformt werden kann. Das Formwerkzeug kann also vorzugsweise so gestaltet werden, dass in Umlaufrichtung gesehen jeweils abschnittsweise genau ein Formwerkzeug den Vorsprung formt, es entfällt also die Notwendigkeit, ein Formwerkzeug mit einem in Leitungsrichtung um den Vorsprung schließenden Mechanismus vorzusehen.

Die Erfindung betrifft auch eine Dichtpackung mit einem Rohrelement, durch welches eine Leitung hindurchführbar ist und an welchem außenseitig umlaufend ein Dichtungselement vorgesehen ist, wobei das Rohrelement und das Dichtungselement Kunststoffformteile sind, welche in einem Verfahren nach einem der vorstehenden Ansprüche hergestellt sind.

Bei einer weiteren Ausführungsform ist in dem Rohrelement innenseitig umlaufend ein weiteres Dichtungselement vorgesehen. Dieses kann vorzugsweise in einem Arbeitsschritt mit dem außenseitig umlaufenden Dichtungselement hergestellt werden und dichtet gegen ein zusätzliches in das Rohrelement einschiebbares Rohrstück. Mittels eines solchen Rohrstücks kann die Dichtpackung erweitert werden, indem eine zweite Dichtpackung von der anderen Seite auf das Rohrstück geschoben wird, sodass zwei gespiegelte Dichtpackungen vorliegen. Eine solche Erweiterung der Dichtpackung kann beispielsweise bei einem Einbau in ein Wand- bzw. Bodenelement mit einer Dicke von vorzugsweise mehr als 0.75 m, besonders bevorzugt mehr als 1 m, von Interesse sein.

Die Erfindung bezieht sich auf die Verwendung einer Dichtpackung für einen permanenten Einbau in ein Wand- oder Bodenelement. Dabei kann der permanente Einbau durch ein Vergießen mit Beton oder Mörtel erfolgen. Es kann jedoch hierfür auch jedes andere Material Verwendung finden, welches verstreichbar oder gießbar ist und durch einen Erhärtungsprozess in einen formfesten Zustand übergeht. Rohr- und Dichtungselement werden dadurch dauerhaft formschlüssig verbaut, können also nicht ohne Beschädigung des Wand- oder Bodenelements herausgenommen werden. Durch das Rohrelement kann dann eine Leitung hindurchgeführt und beispielsweise mit einem Elastomerkörper gegen das Rohrelement gedichtet werden. Dazu kann ein Elastomerkörper verwendet werden, welcher durch eine Kompression in Leitungsrichtung quer zu dieser Richtung expandiert und gegen Leitung und Rohrelement dichtet, oder es können auch spezielle in dem Rohrelement über einen Schließmechanismus arretierbare Einsatzstück zur Dichtung gegen die Leitung verwendet werden.

Im Folgenden wird die Erfindung anhand eines Ausführungsbeispiels näher erläutert, wobei die einzelnen Merkmale auch in anderen Kombinationen erfindungswesentlich sein können und sich implizit auf alle Kategorien der Erfindung beziehen.
Figur 1 zeigt eine Dichtpackung mit Rohrelement und Dichtungselement,
Figur 2 zeigt eine Dichtpackung mit Einsatzstücken,
Figur 3 zeigt einen Ausschnitt eines angeformten Dichtungselements.

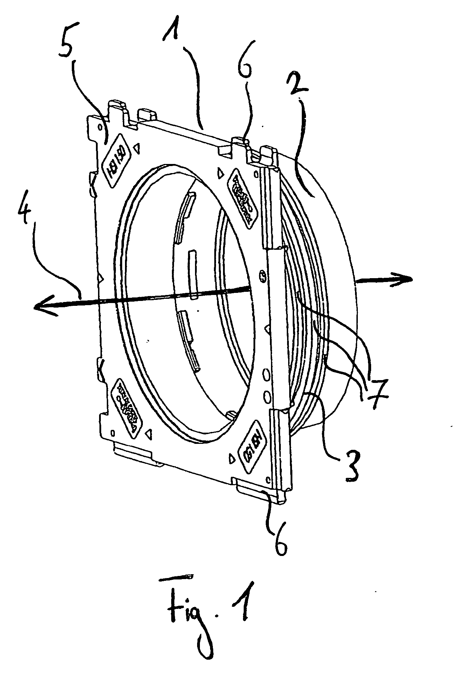

Figur 1 zeigt eine Dichtpackung 1 mit einem Rohrelement 2 aus Acrylnitril-Butadien-Styrol, durch welches eine Leitung hindurchführbar ist und an welches außenseitig umlaufend ein Dichtungselement 3 aus einem thermoplastischen Elastomer angeformt ist. In diesem Beispiel ist an einem Ende des Rohrelements 2 eine sich quer zur Leitungsrichtung 4 erstreckende Platte 5 vorgesehen, welche eine der Durchgangsöffnung des Rohrelements entsprechende Ausnehmung aufweist. An den Kanten der Platte 5 sind nahe den Ecken Verbindungselemente 6 vorgesehen, mittels welchen die .Platte 5 mit einer Platte einer weiteren Dichtpackung 1 verbunden werden kann, sodass eine Durchführung für mehrere Leitungen modular zusammengesetzt werden kann. Es ist jedoch auch möglich, mehrere Leitungen durch das Rohrelement 2 einer einzelnen Dichtpackung 1 zu führen.

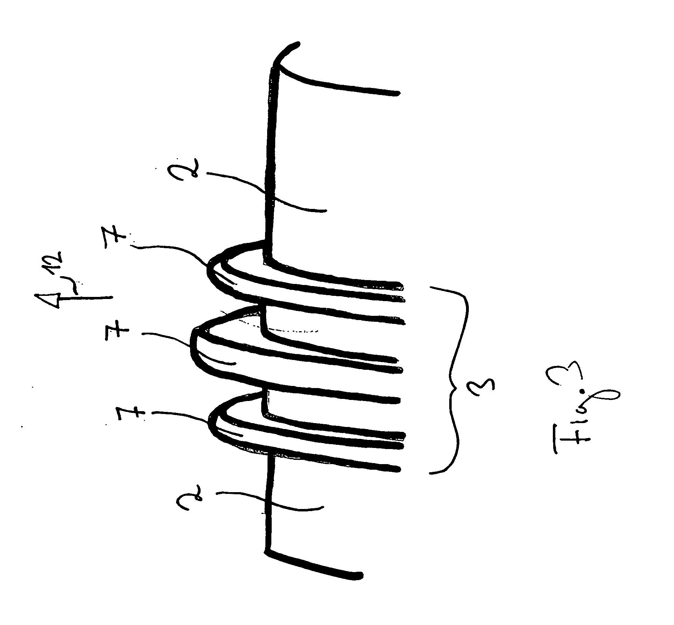

Das außenseitig am Rohrelement 2 angeformte Dichtungselement 3 ist in Umlaufrichtung durchgehend vorgesehen, sodass nach einem Einbau des Rohrelements 2 durch Vergießen in einer Wand über den gesamten Außenumfang des Rohrelements 2 eine Feuchtigkeitssperre vorliegt, welche Kriechpfade entlang der Außenseite des Rohrelements 2 in Leitungsrichtung 4 maximiert und gegebenenfalls vollständig blockiert. Das Dichtungselement 3 ist dazu aus mehreren Vorsprüngen 7 aufgebaut, welche im Detail in Figur 3 gezeigt sind. Da das Dichtungselement 3 direkt an das Rohrelement angeformt wird, gegebenenfalls auch bevor letzteres vollständig ausgehärtet ist, entsteht eine materialschlüssige Verbindung. Die beiden Materialien liegen also direkt aneinander an, wobei u.U. keine scharf verlaufende Grenzfläche mehr festzustellen ist. Die daraus resultierenden guten Hafteigenschaften von Dichtungselement 3 zur Rohrelement 2 bleiben selbst nach einem Kontakt mit Beton mit einem hohen pH-Wert bestehen, sodass auf eine zusätzliche Fixierung mit einer Spannschelle verzichtet werden kann.

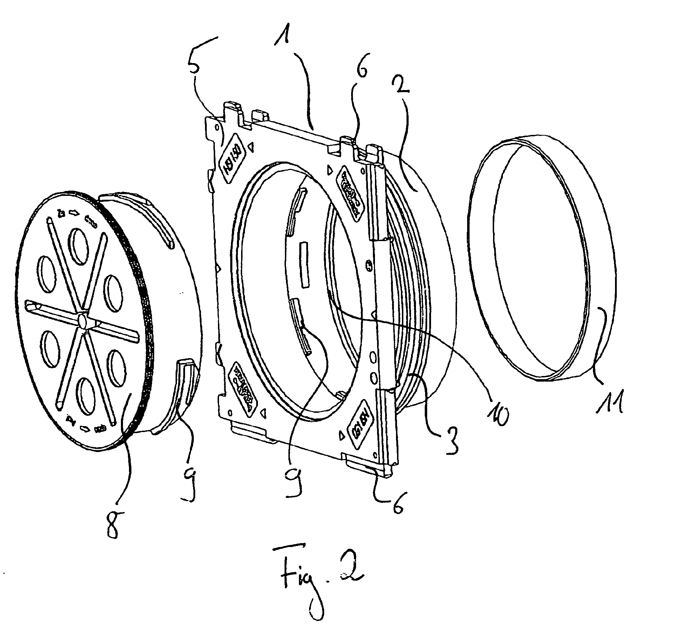

Figur 2 zeigt ein Einsatzstück 8, welches in Leitungsrichtung 4 in das Rohrelement 2 eingesetzt und mittels eines Bajonettverschlusses 9 in dem Rohrelement 2 arretiert werden kann. Dabei kann das Einsatzstück 8 ein Verschlussdeckel sein, welcher das Rohrelement 2 beispielsweise während der Bauphase vollständig verschließt, jedoch können in dem Einsatzstück 8 auch Durchgangsöffnungen für hindurchzuführende Leitungen vorgesehen sein. Es kann auch beispielsweise nach der Bauphase ein Verschlussdeckel durch ein Einsatzstück 8 mit Durchgangsöffnungen ersetzt werden. Figur 2 zeigt ferner ein weiteres Dichtungselement 10, welches innenseitig am Rohrelement umlaufend vorgesehen ist, und gegen ein in das Rohrelement 2 einschiebbares Rohrstück 11 dichtet. Das innenseitig umlaufende Dichtungselement 10 kann dabei in einem Arbeitsschritt mit dem außenseitig umlaufenden Dichtungselement 3, ebenfalls durch Einspritzen von fließfähigem Kunststoffmaterial in eine Kavität, erzeugt werden. Mit dem einschiebbaren Rohrstück 11 kann die Dichtpackung 1 erweitert werden, indem eine zweite Dichtpackung 1 von der anderen Seite auf das Rohrstück 11 geschoben wird, sodass zwei gespiegelte Dichtpackungen 1 vorliegen, also an jeder Seite der Wand ein Rahmen 5.

Figur 3 zeigt als Ausschnittsdarstellung einen Teil des Rohrelements 2 mit dem außenseitig umlaufenden Dichtungselement 3. Dabei sind drei sich quer zur Leitungsrichtung 4 erhebende und um das Rohrelement 2 umlaufende Vorsprünge 7 dargestellt. Die in Leitungsrichtung 4 beabstandeten seitlichen Flanken eines Vorsprungs 7 verlaufen zueinander parallel und der Vorsprung verjüngt sich zu seinem freien Ende hin, ist also hinterschnittfrei. Ein die Vorsprünge 7 formendes Formwerkzeug kann somit beim Entformen in einer Richtung 12 quer zur Leitungsrichtung 4 leicht von dem Dichtungselement 3 genommen werden, es ist also kein besonderer Mechanismus zum Entformen jedes einzelnen Vorsprungs 7 notwendig. Das gesamte Dichtungselement 3 kann also beispielsweise mit zwei Formhälften realisiert werden, von denen jede in Umlaufrichtung einen Winkelbereich von 180° abdeckt.

## Patentansprüche

1. Verwendung einer Dichtpackung (1) mit einem Rohrelement (2), durch welches eine Leitung hindurchführbar ist und an welchem außenseitig umlaufend ein Dichtungselement (3) vorgesehen ist, wobei das Rohrelement (2) und das Dichtungselement (3) Kunststoffformteile sind, welche aneinander angeformt sind durch:
- Zuführen eines fließfähigen Kunststoffmaterials in eine erste Kavität;
- zumindest teilweises Aushärten des fließfähigen Kunststoffmaterials in der ersten Kavität zu einem Kunststoffformteil;
- Bilden einer zweiten Kavität, welche teilweise von dem Kunststoffformteil begrenzt wird;
- Zuführen eines fließfähigen Kunststoffmaterials in die zweite Kavität;
- zumindest teilweises Aushärten des fließfähigen Kunststoffmaterials in der zweiten Kavität zu einem an das erste Kunststoffformteil angeformten Kunststoffformteil;
wobei sich das erste und das zweite fließfähige Kunststoffmaterial in zumindest einem Bestandteil unterscheiden und
wobei ferner eine der beiden Kavitäten ein Rohrelement (2) der Dichtpackung (1) freigibt, durch welches eine Leitung hindurchführbar ist, und die andere der beiden Kavitäten ein außenseitig um das Rohrelement (2) umlaufendes Dichtungselement (3) freigibt
für einen permanenten Einbau in ein Wand- oder Bodenelement.

2. Verwendung nach Anspruch 1, bei welcher das Wand- oder Bodenelement aus Mauerwerk oder Beton vorgesehen ist.

3. Verwendung nach Anspruch 1 oder 2, bei welcher das Dichtungselement (3) aus Kunststoffmaterial mit einem thermoplastischen Elastomer als Bestandteil vorgesehen ist.

4. Verwendung nach einem der vorstehenden Ansprüche, bei welcher das Rohrelement (2) aus Kunststoffmaterial mit Acrylnitril-Butadien-Styrol als Bestandteil vorgesehen ist.

5. Verwendung nach einem der vorstehenden Ansprüche, bei welcher das Dichtungselement (3) mit einem sich quer zur Leitungsrichtung (4) erhebenden und um das Rohrelement (2) umlaufenden Vorsprung (7) vorgesehen ist.

6. Verwendung nach Anspruch 5, bei dem die in Leitungsrichtung (4) beabstandeten Flanken des Vorsprungs (7) sich quer zur Leitungsrichtung (4) hinterschnittfrei erheben,

7. Verwendung nach Anspruch 6, wobei in dem Rohrelement (2) innenseitig umlaufend ein weiteres Dichtungselement (10) vorgesehen ist.

## Claims

1. The use of a seal packing (1) having a tube element (2) through which a conduit or cable can be led through, wherein a sealing element (3) is provided on the outside of said tube element (2) circumferentially, said tube element (2) and said sealing element (3) being moulded plastic material components formed one against the other by:
- feeding a plastic material capable of flowing to a first cavity;
- hardening at least partly said plastic material capable of flowing in said first cavity for forming a plastic material component;
- providing a second cavity which is partly defined by said plastic material component;
- feeding a plastic material capable of flowing to said second cavity;
- hardening at least partly said plastic material capable of flowing in said second cavity for forming a plastic material component which is formed against said first plastic material component;
wherein said first and said second plastic material capable of flowing differ in at least one component and
wherein further one of said first and said second cavity releases said tube element (2) of said seal packing (1), through which a conduit or cable can be led through, and the other one of said first cavity and said second cavity releases said sealing element (3) extending circumferentially on the outside of said tube element (2)
for a permanent assembly in a wall or floor element.

2. The use according to claim 1, wherein said wall or floor element is provided as a brickwork or made of concrete.

3. The use according to claim 1 or 2, wherein said sealing element (3) is made of a plastic material comprising a thermoplastic elastomer as a component.

4. The use according to one of the proceeding claims, wherein said tube element (2) is made of a plastic material comprising acrylonitrile butadiene styrene as a component.

5. The use according to one of the proceeding claims, wherein said sealing element (3) is provided with an elevation (7) projecting obliquely to said conduit direction (4) and extending circumferentially around said tube element (2).

6. The use according to claim 5, wherein the flanks of said elevation (7), which are distant to each other with respect to said conduit direction (4), project without an undercut.

7. The use according to claim 6, wherein an additional sealing element (10) is provided inside said tube element (2), extending circumferentially.

## Revendications

1. Utilisation d'un passage de conduite ou de câble étanche (1) comportant un élément tubulaire (2) par lequel une conduite ou un câble est susceptible de passer et au niveau duquel il est prévu un élément d'étanchéité (3) périphérique extérieur, l'élément tubulaire (2) et l'élément d'étanchéité (3) étant des pièces en plastique moulées formées l'une contre l'autre en:
- introduisant une matière plastique coulable dans une première cavité;
- faisant durcir au moins partiellement la matière plastique coulable dans la première cavité pour former une pièce en plastique moulée;
- formant une seconde cavité partiellement délimitée par la pièce en plastique moulée;
- introduisant une matière plastique coulable dans la seconde cavité;
- faisant durcir au moins partiellement la matière plastique coulable dans la seconde cavité pour former une pièce en plastique moulée constituée d'un seul tenant avec la première pièce en plastique moulée;
la première et la seconde matière plastique coulable se distinguant l'une de l'autre par au moins un composant et, en outre,
l'une des deux cavités produisant un élément tubulaire (2) du passage de conduite ou de câble étanche (1) par lequel une conduite ou un câble est susceptible de passer, et l'autre des deux cavités produisant un élément d'étanchéité (3) encerclant extérieurement l'élément tubulaire (2),
à des fins d'encastrement permanent dans un élément de paroi ou de fond.

2. Utilisation selon la revendication 1, dans laquelle l'élément de paroi ou de fond est réalisé en matériau de maçonnerie ou en béton.

3. Utilisation selon la revendication 1 ou 2, dans laquelle l'élément d'étanchéité (3) est réalisé dans une matière plastique dont un composant est un élastomère thermoplastique.

4. Utilisation selon l'une quelconque des revendications précédentes, dans laquelle l'élément tubulaire (2) est réalisé dans une matière plastique dont un composant est l'acrylonitrile butadiène styrène.

5. Utilisation selon l'une quelconque des revendications précédentes, dans laquelle l'élément d'étanchéité (3) est pourvu d'une saillie (7) qui s'élève transversalement à la direction de la conduite ou du câble (4) en entourant l'élément tubulaire (2).

6. Utilisation selon la revendication 5, dans laquelle les flancs de la saillie (7) espacés dans la direction de la conduite ou du câble (4) s'élèvent transversalement à la direction de la conduite ou du câble (4) sans contre-dépouille.

7. Utilisation selon la revendication 6, dans laquelle il est prévu un autre élément d'étanchéité (10) dans l'élément tubulaire (2), lequel encercle ce dernier intérieurement.
